# EUROPÄISCHE PATENTSCHRIFT

(11) **EP 3 906 421 B1**
(45) Veröffentlichungstag und Bekanntmachung des Hinweises auf die Patenterteilung: **25.02.2026**
(21) Anmeldenummer: 19832713.2
(22) Anmeldetag: 28.12.2019
(51) Int. Cl.: G01S 7/40, G01S 7/497, G01S 13/931, G01S 17/931, G01S 13/34

(54) **VERFAHREN ZUM BETRIEB EINER PRÜFVORRICHTUNG ZUM TEST EINES MIT ELEKTROMAGNETISCHEN WELLEN ARBEITENDEN ABSTANDSSENSORS UND ENTSPRECHENDE PRÜFVORRICHTUNG**
METHOD FOR OPERATING A TESTING APPARATUS FOR TESTING A DISTANCE SENSOR OPERATING BY MEANS OF ELECTROMAGNETIC WAVES AND CORRESPONDING TESTING APPARATUS
PROCÉDÉ POUR FAIRE FONCTIONNER UN DISPOSITIF DE CONTRÔLE POUR TESTER UN CAPTEUR DE DISTANCE FONCTIONNANT AVEC DES ONDES ÉLECTROMAGNÉTIQUES ET DISPOSITIF DE CONTRÔLE CORRESPONDANT

(30) Priorität: 31.12.2018 US 201862786767 P
(43) Veröffentlichungstag der Anmeldung: 10.11.2021
(73) Patentinhaber: dSPACE GmbH, 33102 Paderborn (DE)
(72) Erfinder: PAUL, Jeffrey, Torrance, California 90501 (US); BERGEN, Ronald, Mission Viejo, California 92692 (US)
(74) Vertreter: Gesthuysen Patentanwälte
(86) Internationale Anmeldenummer: PCT/EP2019/087125
(87) Internationale Veröffentlichungsnummer: WO 2020/141151

(56) Entgegenhaltungen:
- US-A- 4 450 447
- US-A- 5 920 281
- US-A1- 2004 012 517
- ABOU-JAOUDE R ET AL: "LOW COST 76GHZ RADAR TARGET SIMULATOR AND TEST SYSTEM", 30TH EUROPEAN MICROWAVE CONFERENCE PROCEEDINGS. PARIS, OCT. 3 - 5, 2000; [PROCEEDINGS OF THE EUROPEAN MICROWAVE CONFERENCE], LONDON : CMP, GB, vol. CONF. 30, 4 October 2000 (2000-10-04), pages 361 - 364, XP001060950, ISBN: 978-0-86213-212-5
- MICHAEL ROZMANN: "Echte Echos im Labor, Radartestplatz", DSPACE MAGAZIN, 2/2017, 1 December 2017 (2017-12-01), pages 48 - 51, XP055679028, Retrieved from the Internet <URL:https://www.dspace.com/shared/data/pdf/2017/10_Real%20Echoes%20in%20the%20Lab_de.pdf> [retrieved on 20200324]

## Beschreibung

Die Erfindung betrifft ein Verfahren zum Betrieb einer Prüfvorrichtung zum Test eines mit elektromagnetischen Wellen arbeitenden Abstandssensors, nämlich zur Erzeugung und Abstrahlung eines simulierten elektromagnetischen Reflexionssignals S_{TX} mit einer Reflexionsfrequenz f_{TX}, wobei eine elektromagnetische Freiraumwelle als Empfangssignal S_{RX} mit einer Empfangsfrequenz f_{RX} und einer Signalbandbreite B empfangen wird und wobei das Reflexionssignal S_{TX} aus dem elektromagnetischen Empfangssignal S_{RX} erzeugt wird, wobei die Reflexionsfrequenz f_{TX} um eine Dopplerfrequenz f_{D} gegenüber der Empfangsfrequenz f_{RX} verschoben ist, wobei die Dopplerfrequenz f_{D} kleiner ist als die Signalbandbreite B des Empfangssignals S_{RX}. Darüber hinaus betrifft die Erfindung auch eine entsprechende Prüfvorrichtung, also eine Prüfvorrichtung zum Test eines mit elektromagnetischen Wellen arbeitenden Abstandssensors zur Durchführung des vorgenannten Verfahrens, mit einem Empfangselement zum Empfangen einer elektromagnetischen Freiraumwelle als Empfangssignal S_{RX} mit einer Empfangsfrequenz f_{RX} und einer Signalbandbreite B, mit einem Abstrahlelement zur Abstrahlung eines simulierten elektromagnetischen Reflexionssignals S_{TX} mit einer Reflexionsfrequenz f_{TX}, wobei eine Signalelektronik das Reflexionssignal S_{TX} aus dem elektromagnetischen Empfangssignal S_{RX} erzeugt, wobei die Signalelektronik das Reflexionssignal S_{TX} mit einer Reflexionsfrequenz f_{TX} erzeugt, die um eine zu simulierende Dopplerfrequenz f_{D} gegenüber der Empfangsfrequenz f_{RX} des Empfangssignals S_{RX} verschoben ist, wobei die Dopplerfrequenz f_{D} kleiner ist als die Signalbandbreite B des Empfangssignals S_{RX}.

Die vorgenannten Verfahren zum Betrieb einer Prüfvorrichtung und entsprechende Prüfvorrichtungen zum Test von Abstandssensoren sind seit jüngerer Zeit aus dem Bereich der Steuergeräteentwicklung und des Steuergerätetests - beispielsweise im automotiven Bereich - bekannt. Ein Beispiel eines entsprechenden Radarziel-Simulators ist aus US 2004/012517 A1 bekannt.

Ein häufiges Testszenario besteht hier darin, die Funktionalität eines Seriensteuergeräts mittels einer simulierten Umwelt zu testen. Dazu wird die Umwelt des Steuergeräts in Teilen oder auch vollständig mittels einer leistungsfähigen Simulationsumgebung in Echtzeit berechnet, wobei die Simulationsumgebung physikalische Signale, die Eingangssignale des Steuergeräts sind, generiert und wobei die Simulationsumgebung die von dem Steuergerät generierten Ausgangssignale aufnimmt und mit in die Echtzeitsimulation einfließen lässt. Steuergeräte können so gefahrlos in einer simulierten Umgebung unter praktisch "echten" Bedingungen getestet werden. Wie realitätsnah der Test ist, hängt von der Güte der Simulationsumgebung und der darauf berechneten Simulation ab. Steuergeräte können so also im geschlossenen Regelkreis getestet werden, weshalb derartige Testszenarien auch als Hardware-in-the-Loop-Tests bezeichnet werden.

Im vorliegenden Fall geht es um den Test von Abstandssensoren, die mit elektromagnetischen Wellen arbeiten. Im automotiven Bereich werden ganz überwiegend Radarsensoren eingesetzt. Grundsätzlich können aber auch Abstandssensoren getestet werden, die in einem anderen Frequenzbereich elektromagnetischer Wellen arbeiten, beispielsweise im Bereich des sichtbaren Lichts, oder die mit elektromagnetischen Strahlungsquellen arbeiten, die elektromagnetische Wellen mit einer langen Kohärenzlänge emittieren, wie beispielsweise bei Laseranwendungen (zum Beispiel Lidar).

In modernen Fahrzeugen werden in zunehmendem Maße Abstandssensoren eingesetzt, um das Fahrzeug und dessen Assistenzsysteme mit Umgebungsinformationen zu versorgen. So werden Position und Geschwindigkeit von Objekten in der Fahrzeugumgebung ermittelt. Zu den Assistenzsystemen, die derartige Umgebungsinformationen verwenden, gehören beispielsweise die adaptive Geschwindigkeitsregelung (adaptive cruise control, ACC) und das autonome Notfallbremssystem (autonomous emergency breaking, AEB). Es ist nachvollziehbar, dass der Test derartiger sicherheitsrelevanter Assistenzsysteme mit hoher Sorgfalt erfolgen muss, wobei auch das Ausbreitungsverhalten der elektromagnetischen Wellen möglichst realitätsnah zu berücksichtigen ist. Dies erfolgte in der Vergangenheit überwiegend durch sehr kostspielige und zeitaufwendige reale Fahrtests. Diese Fahrtests werden zunehmend ersetzt durch die eingangs beschriebenen Prüfvorrichtungen zum Test eines Abstandssensors, auch Prüfstände genannt, in denen auch mit Freiraumwellen gearbeitet wird. Derartige Prüfstände werden auch OTA-Prüfstände genannt (over-the-air), in denen der zu testende Abstandssensor tatsächlich elektromagnetische Wellen in den Freiraum, also ungeführt abstrahlt und auch elektromagnetische Wellen aus dem Freiraum als simuliertes Reflexionssignal empfängt. Vorteil derartiger OTA-Prüfstände ist die weitreichende Überprüfung der gesamten Wirkkette im Zusammenhang mit dem zu testenden Abstandssensor, einschließlich des Abstrahl- und Empfangsverhaltens, an denen das Sensor-Abstrahlelement und das Sensor-Empfangselement beteiligt sind.

Unabhängig davon, welche Art von elektromagnetischer Welle der zu testende Abstandssensor verwendet, werden bei dem Test von Abstandssensoren extrem hohe Anforderungen an die erforderliche elektronische Signalverarbeitung gestellt. Entfernungen eines Objekts in der Umgebung werden meist direkt über die Signallaufzeit ermittelt, die die abgestrahlten elektromagnetischen Wellen zu dem Objekt und von dem Objekt zurück zum Abstandssensor reflektiert, benötigt. Radiale Geschwindigkeitsanteile von Objekten in der Umgebung werden über Frequenzverschiebungen zwischen der abgestrahlten elektromagnetischen Welle und der reflektierten elektromagnetischen Welle bestimmt (Dopplerverschiebung).

Aufgrund der sich mit Lichtgeschwindigkeit ausbreitenden elektromagnetischen Wellen müssen hier sehr geringe Signallaufzeiten aufgelöst werden. Um beispielsweise eine Minimaldistanz von einem Meter erfassen zu können, müssen Signallaufzeiten im Nanosekundenbereich aufgelöst werden. Sollen größere Distanzen, also unabhängig von der Frage der Minimaldistanz, im Bereich von Zentimetern erfasst werden, müssen Laufzeitunterschiede auch im Sub-Nanosekundenbereich aufgelöst werden können.

Die vorliegende Erfindung beschäftigt sich mit der Nachbildung eines beweglichen Objektes, das sich mit einer gewissen Radialgeschwindigkeit von einem zu testenden Abstandssensor wegbewegt oder auf den zu testenden Abstandssensor zubewegt. Diese radialen Bewegungsanteile werden durch die Erfassung der Frequenzverschiebung des reflektierten Reflexionssignals gegenüber der Frequenz des von dem zu testenden Abstandssensor abgestrahlten Sendesignals ermittelt; diese Frequenzverschiebung ist die eingangs bereits angesprochene Dopplerfrequenz f_{D}.

In dem Prüfstand bzw. in der Prüfvorrichtung sollen die vom zu testenden Abstandssensor abgestrahlten elektromagnetischen Wellen tatsächlich nicht reflektiert werden, vielmehr werden die abgestrahlten elektromagnetischen Wellen von einem Empfangselement der Prüfvorrichtung empfangen und in einer nachgelagerten schnellen Signalelektronik - einem Abstand- und Bewegungssimulator - verarbeitet, nämlich laufzeitverzögert und frequenzmoduliert. In Abhängigkeit von dem zu simulierenden Abstand zu einem simulierten Umfeldobjekt oder in Abhängigkeit von der radialen Relativgeschwindigkeit des Umfeldobjektes zum zu testenden Abstandssensor werden entsprechend zeitverzögerte und/oder um die Dopplerfrequenz frequenzverschobene Signale von der Signalelektronik erzeugt und als simuliertes - also nicht tatsächliches - Reflexionssignal über das Abstrahlelement der Prüfvorrichtung wieder in Richtung auf den zu testenden Abstandssensor emittiert. So entsteht beim Abstandssensor der Eindruck einer echten Umgebung mit gegebenenfalls auch mehreren unterschiedlich weit entfernten und unterschiedlich schnell bewegten Objekten im simulierten Umfeld.

Aus dem Stand der Technik bekannte Prüfvorrichtungen ("Echte Echos im Labor": dSPACE Magazin 2/2017 aus Dezember 2017) zeichnen sich durch einen mechanischen Prüfstandaufbau, der hier nicht weiter betrachtet werden soll, und durch eine Signalelektronik zur Generierung eines simulierten Reflexionssignals aus, worum es vorliegend geht, speziell nämlich um die Frequenzverschiebung des Empfangssignals um die Dopplerfrequenz f_{D}. Eine besondere Herausforderung liegt hier darin, dass Signale mit sehr unterschiedlicher Frequenz miteinander verarbeitet werden müssen, Frequenzen, die sich um viele Größenordnungen unterscheiden können. Dies wird anhand eines praktischen Beispiels deutlich. Wenn das Sendesignal des zu testenden Abstandssensors beispielsweise eine (Mitten-)Frequenz von 77 GHz hat und sich ein Objekt mit 100 m/s radial zu dem Abstandssensor bewegt (was immerhin 360 km/h entspricht, eine praktisch schon unrealistisch hohe Geschwindigkeit im automotiven Bereich), dann beträgt die Dopplerfrequenz f_{D}, also der Frequenzunterschied zwischen abgestrahltem und empfangenem Signal am zu testenden Abstandssensor nur etwa 51,55 kHz (in erster Näherung gilt nicht-relativistisch für gegenüber der Lichtgeschwindigkeit c kleine Objektgeschwindigkeiten v und für abgestrahlte Radarsignale mit der Frequenz f_{R} : f_{D} = 2*v/c*f_{R}; der Faktor "2" wegen des doppelten Effekts am Abstrahlungsort der Radarstrahlung, also nach der Reflexion). Der Unterschied zwischen den Frequenzen liegt also nur im Bereich von tausendstel Promille, mit entsprechend hohen Anforderungen an die Genauigkeit der Signalelektronik, die aus vorgenanntem Grund häufig aufwendig aufgebaut und entsprechend kostspielig in der Umsetzung ist. Wenn das Radarsignal selbst eine Bandbreite von 1 GHz hat, dann sind die Verhältnisse auch gegenüber dieser Bezugsgröße nicht viel unkritischer.

Aufgabe der vorliegenden Erfindung ist es daher, das eingangs beschriebene Verfahren zum Betrieb einer Prüfvorrichtung zum Test eines mit elektromagnetischen Wellen arbeitenden Abstandssensors und eine diesbezügliche Prüfvorrichtung so auszugestalten und weiterzubilden, dass es auf verhältnismäßig einfache Weise möglich ist, aus einem Empfangssignal ein gewünschtes Reflexionssignal zu genieren, das um eine relativ kleine Dopplerfrequenz gegenüber dem Empfangssignal frequenzmoduliert ist.

Die zuvor hergeleitete und aufgezeigte Aufgabe ist erfindungsgemäß bei dem eingangs dargestellten Verfahren zum Betrieb einer Prüfvorrichtung zum Testen eines mit elektromagnetischen Wellen arbeitenden Abstandssensors dadurch gelöst, dass das Empfangssignal S_{RX}, das die Prüfvorrichtung also unmittelbar als Freiraumwelle von dem zu testenden Abstandssensor erhält, in ein erstes Arbeitssignal S₁ mit einer ersten Arbeitsfrequenz f₁ umgesetzt wird, wobei die Arbeitsfrequenz f₁ um eine Umsetzfrequenz f_{U} kleiner ist als die Empfangsfrequenz f_{RX} des Empfangssignals S_{RX}. Dadurch wird zunächst grundsätzlich bewirkt, dass die Signalelektronik intern mit einer erheblich niedrigeren Frequenz arbeiten kann als der Frequenz, die das Empfangssignal S_{RX} aufweist. Es bietet sich an, hier einen großen Frequenzsprung f_{U} zu realisieren. Wenn das Empfangssignal S_{RX} beispielsweise eine Frequenz f_{RX} von 77 GHz aufweist, dann sollte die Umsetzung idealerweise in den Bereich von unter 10 GHz erfolgen.

Darüber hinaus wird das erstes Arbeitssignal S₁ in ein zweites Arbeitssignal S₂ mit einer zweiten Arbeitsfrequenz f₂ umgesetzt (das zweite Arbeitssignal S₂ weist also die zweite Arbeitsfrequenz f₂ auf, wobei der Betrag der Differenz aus der ersten Arbeitsfrequenz f₁ und der zweiten Arbeitsfrequenz f₂ mindestens so groß ist wie die Signalbandbreite B, vorzugsweise mindestens so groß ist wie die Summe aus der Signalbandbreite B und der Dopplerfrequenz f_{D}. Die Sinnhaftigkeit dieser Maßnahme leuchtet erst im Zusammenhang mit dem nachfolgenden Verfahrensschritt ein. Hier ist vorgesehen, dass das zweite Arbeitssignal S₂ in ein drittes Arbeitssignal S₃ mit einer dritten Arbeitsfrequenz f₃ umgesetzt wird, das dritte Arbeitssignal S₃ weist also diese dritte Arbeitsfrequenz f₃ auf. Dabei entspricht die dritte Arbeitsfrequenz f₃ der um die Dopplerfrequenz f_{D} verschobenen ersten Arbeitsfrequenz f₁.

Schließlich wird dieses dritte Arbeitssignal S₃ um die Umsetzfrequenz f_{U} erhöht und so in das Reflexionssignal S_{TX} umgesetzt und abgestrahlt. Die Umsetzfrequenz f_{U} ist die gleiche Umsetzfrequenz f_{U}, mit der auch im Eingangsbereich das Empfangssignal S_{RX} in ein erstes Arbeitssignal S₁ frequenzmäßig heruntergesetzt worden ist. Das Heruntersetzen des Empfangssignals S_{RX} in das erste Arbeitssignal S₁ mit der Umsetzfrequenz f_{U} und das Hochsetzen des dritten Arbeitssignals mit der gleichen Umsetzfrequenz f_{U} eröffnet zum einen interessante schaltungstechnische Möglichkeiten zur Realisierung des hier vorgestellten Verfahrens, zum anderen werden dadurch Randbedingungen definiert, die Einfluss auf die Umsetzung des ersten Arbeitssignals S₁ in das zweite Arbeitssignal S₂ und auf die Umsetzung des zweiten Arbeitssignals S₂ in das dritte Arbeitssignal S₃ haben.

Eingangs ist erwähnt worden, dass das Empfangssignal S_{RX} eine Empfangsfrequenz f_{RX} und eine Signalbandbreite B aufweist. Anschaulich ist darunter zu verstehen, dass das Frequenzspektrum des Signals eine Mittenfrequenz f_{RX} hat und sich Amplituden ≠ 0 jeweils symmetrisch links und rechts, also hin zu kleineren Frequenzen und hin zu größeren Frequenzen erstrecken, und zwar mit der Signalbandbreite B. Das Frequenzspektrum erstreckt sich also um B/2 nach links von der Mittenfrequenz f_{RX} und um B/2 nach rechts von der Mittenfrequenz f_{RX}. In entsprechender Weise sind auch die anderen hier behandelten Signale zu verstehen.

Bei einer weiteren Ausgestaltung des Verfahrens ist vorgesehen, dass die Umsetzung des Empfangssignals S_{RX} in das erste Arbeitssignal S₁ durch Mischen des Empfangssignals S_{RX} mit einem Lokaloszillator-Signal S_{LO} der Umsetzfrequenz f_{U} erfolgt. Bei dem Mischen wird das Empfangssignal S_{RX} in seiner Mittenfrequenzlage umgesetzt, nämlich in Abhängigkeit von der Umsetzfrequenz f_{U} des Lokaloszillator-Signals S_{LO}. Bevorzugt wird - beispielsweise bei einer multiplikativen Mischung - nur das heruntergemischte Signal erhalten, indem ein geeigneter Tief- oder Bandpassfilter eingesetzt wird.

Bei einer weiteren vorteilhaften Ausgestaltung ist vorgesehen, dass die Umsetzung des dritten Arbeitssignals S₃ in das Reflexionssignal S_{TX} erzielt wird durch Mischen des dritten Arbeitssignals S₃ mit einem Lokaloszillator-Signal S_{LO} der Umsetzfrequenz f_{U}. Dies ist im Zusammenhang mit dem gleichzeitigen Heraufmischen des Empfangssignals S_{RX} in das erste Arbeitssignal S₁ vorteilhaft. In diesem Fall ist nämlich vorgesehen, dass es sich bei dem Heruntermischen wie auch bei dem Heraufmischen bei dem Lokaloszillator-Signal S_{LO} der Umsetzfrequenz f_{U} um ein identisches Lokaloszillator-Signal S_{LO} handelt, das von einem einzigen Lokaloszillator erzeugt wird. Diese Lösung ist gerätetechnisch sehr einfach und kostengünstig umzusetzen.

Das erfindungsgemäße Verfahren zeichnet sich dadurch aus, dass das erste Arbeitssignal S₁ in das zweite Arbeitssignal S₂ umgesetzt wird durch zeitdiskretes Abtasten des Arbeitssignals S₁ mit einer Abtastfrequenz fₛₐₘₚₗₑ und nachfolgendes digital/analog-Wandeln des abgetasteten Arbeitssignals S₁ in ein analoges Arbeitssignal S₂. Dieser Verfahrensschritt nutzt den Umstand aus, dass bei einem zeitdiskreten Abtasten eines Signals im Frequenzspektrum des abgetasteten Signals sich periodisch wiederholende Frequenzbänder entstehen und sich insoweit eine zeitdiskrete Abtastung zur Frequenzverschiebung eines Signals anbietet. Wenn das erste Arbeitssignal S₁ die erste Arbeitsfrequenz f₁ aufweist und das Frequenzspektrum des Signals ebenfalls eine Signalbandbreite B hat, dann wiederholt sich im abgetasteten Signal dieses Band in den Abständen f₁ +/- n*fₛₐₘₚₗₑ mit n = {...;- 3; - 2; - 1; 0; 1; 2; 3; ...}. Zu berücksichtigen ist, dass auch das negative Frequenzband des abgetasteten Signals entsprechend periodisch fortzusetzen ist, also auch ausgehend von der negativen ersten Arbeitsfrequenz -f₁. Vorzugsweise wird dann das zweite Arbeitssignal S₂ nur weiter betrachtet, dessen Arbeitsfrequenz f₁ niedriger ist als die erste Arbeitsfrequenz f₁ des ersten Arbeitssignals S₁.

Dadurch, dass schon die erste Arbeitsfrequenz f₁ des ersten Arbeitssignals S₁ kleiner ist - unter Umständen sehr viel kleiner ist - als die Empfangsfrequenz f_{RX} des Empfangssignals, können für die analog/digital-Wandlungen bzw. für die entsprechende digital/analog-Wandlungen des abgetasteten Arbeitssignals S₁ entsprechend langsamere Analog/Digital-Wandler bzw. Digital/Analog-Wandler verwendet werden, insgesamt werden die zu bewältigenden Datenraten so erheblich reduziert.

Erfindungsgemäß wird für die Abtastung gefordert, dass die Abtastfrequenz fₛₐₘₚₗₑ größer ist als die Signalbandbreite B des Empfangssignals S_{RX}. Durch diese Maßnahme wird sichergestellt, dass sich die periodisch wiederholenden Bänder des abgetasteten ersten Arbeitssignals im Frequenzspektrum nicht überlappen, was Voraussetzung dafür ist, dass eine einwandfreie Rekonstruktion des abgetasteten Signals möglich ist. Erfindungsgemäß Ausgestaltung ist zudem vorgesehen, dass das erste Arbeitssignal S₁ unterabgetastet wird, fₛₐₘₚₗₑ ist demnach kleiner als die doppelte größte Frequenz im Spektrum des ersten Arbeitssignals S₁. Bei dieser Auslegung können durch Aliasing bzw. Folding Anteile im Frequenzspektrum des abgetasteten Signals entstehen, die frequenzmäßig kleiner sind als die Frequenzen des abgetasteten Signals. Dieser meist unerwünschte Effekt kann jedoch gezielt genutzt werden und wird dann häufig als digital down conversion (DDC) bezeichnet. Mit dem Wissen, dass das niederfrequente Aliasing-Band bzw. Folding-Band nur ein niederfrequentes Abbild des höherfrequenten Signals ist, lässt sich das abgetastete Signal einwandfrei aus einem niederfrequenteren Aliasing-Band bzw. einem niederfrequenteren Folding-Band rekonstruieren.

Bei einer Ausgestaltung ist vorgesehen, dass das zweite Arbeitssignal S₂ und das dritte Arbeitssignal S₃ durch Mischen mit einem ersten Hilfssignal S_{H1} mit einer Frequenz f_{H1} umgesetzt wird. Vorteilhafterweise entspricht dann die Frequenz f_{H1} des ersten Hilfssignals S_{H1} der Summenfrequenz aus der Frequenz f₁ des ersten Arbeitssignals S₁, aus der Frequenz f₂ des zweiten Arbeitssignals S₂ und der Dopplerfrequenz f_{D} bzw. der negativen Dopplerfrequenz -f_{D}. Hier wird bereits deutlich, dass wenn ein solches erstes Hilfssignal S_{H1} mit dem zweiten Arbeitssignal S₂ mit der zweiten Arbeitsfrequenz f₂ heruntergemischt wird, ein drittes Arbeitssignal S₃ resultiert, das - wie gewünscht - die Frequenz f₁ + / -f_{D} aufweist. Wird dieses Arbeitssignal S₃ nun mit der Umsetzfrequenz f_{U} hochgemischt, resultiert ein Reflexionssignal mit der gewünschten Reflexionsfrequenz f_{TX}, die der Frequenz f_{RX} des Empfangssignals S_{RX} entspricht, jedoch um die Dopplerfrequenz f_{D} erhöht (sich radial näherndes Objekt) oder verringert ist (sich radial entfernendes Objekt).

Das vorgestellte Verfahren lässt sich gerätetechnisch recht einfach und kostengünstig umsetzen mit größtensteils analoger Schaltungstechnik, insbesondere bei der Erzeugung des dritten Arbeitssignals S₃ aus dem zweiten Arbeitssignal S₂, bei der die zu simulierende Dopplerfrequenz f_{D} signalmäßig eingebracht wird.

Die hergeleitete Aufgabe wird bei der eingangs dargestellten Prüfvorrichtung zum Test eines mit elektromagnetischen Wellen arbeitenden Abstandssensors dadurch gelöst, dass entsprechende Mittel bereitgestellt werden, die die Durchführung des zuvor beschriebenen Verfahrens mit der Prüfvorrichtung ermöglichen, wobei die Mittel konkret so eingerichtet sind, dass die Prüfvorrichtung im Betrieb das zuvor beschriebene Verfahren durchführt. Speziell bedeutet dies, dass das Empfangssignal S_{RX} mit einem ersten Umsetzer in ein erstes Arbeitssignal S₁ mit einer ersten Arbeitsfrequenz f₁ umgesetzt wird, wobei die Arbeitsfrequenz f₁ um eine Umsetzfrequenz f_{U} kleiner ist als die Empfangsfrequenz f_{RX} des Empfangssignals S_{RX}, dass das erste Arbeitssignal S₁ mit einem zweiten Umsetzer in ein zweites Arbeitssignal S₂ mit einer zweiten Arbeitsfrequenz f₂ umgesetzt wird, wobei der Betrag der Differenz aus der ersten Arbeitsfrequenz f₁ und der zweiten Arbeitsfrequenz f₂ mindestens so groß ist wie die Signalbandbreite B, vorzugsweise mindestens so groß ist wie die Summe aus der Signalbandbreite B und der Dopplerfrequenz f_{D}, dass das zweite Arbeitssignal S₂ mit einem dritten Umsetzer in ein drittes Arbeitssignal S₃ mit einer dritten Arbeitsfrequenz f₃ umgesetzt wird, wobei die dritte Arbeitsfrequenz f₃ der um die Dopplerfrequenz f_{D} verschobenen ersten Arbeitsfrequenz f₁ entspricht und dass das dritte Arbeitssignal S₃ mit einem vierten Umsetzer um die Umsetzfrequenz f_{U} erhöht wird und so in das Reflexionssignal S_{TX} umgesetzt und abgestrahlt wird.

Im Einzelnen gibt es nun eine Vielzahl von Möglichkeiten, das erfindungsgemäße Verfahren zum Betrieb einer Prüfvorrichtung zum Test eines mit elektromagnetischen Wellen arbeitenden Abstandssensors und eine diesbezügliche Prüfvorrichtung auszugestalten und weiterzubilden. Dazu wird verwiesen einerseits auf die den unabhängigen Patentansprüchen nachgeordneten Patentansprüche, andererseits auf die folgende Beschreibung von Ausführungsbeispielen in Verbindung mit der Zeichnung. In der Zeichnung zeigen
- Fig. 1: ein aus dem Stand der Technik bekanntes Verfahren zum Betrieb einer Prüfvorrichtung zum Test eines mit elektromagnetischen Wellen arbeitenden Abstandssensors sowie eine derartige Prüfvorrichtung,
- Fig. 2: ein erfindungsgemäßes Verfahren anhand von frequenzspektren verschiedener Signale,
- Fig. 3: ein erfindungsgemäßes Verfahren und eine erfindungsgemäße Vorrichtung anhand eines schematischen Signallaufplanes und
- Fig. 4: eine detailliertere Darstellung des dritten Umsetzers in analoger Technik.

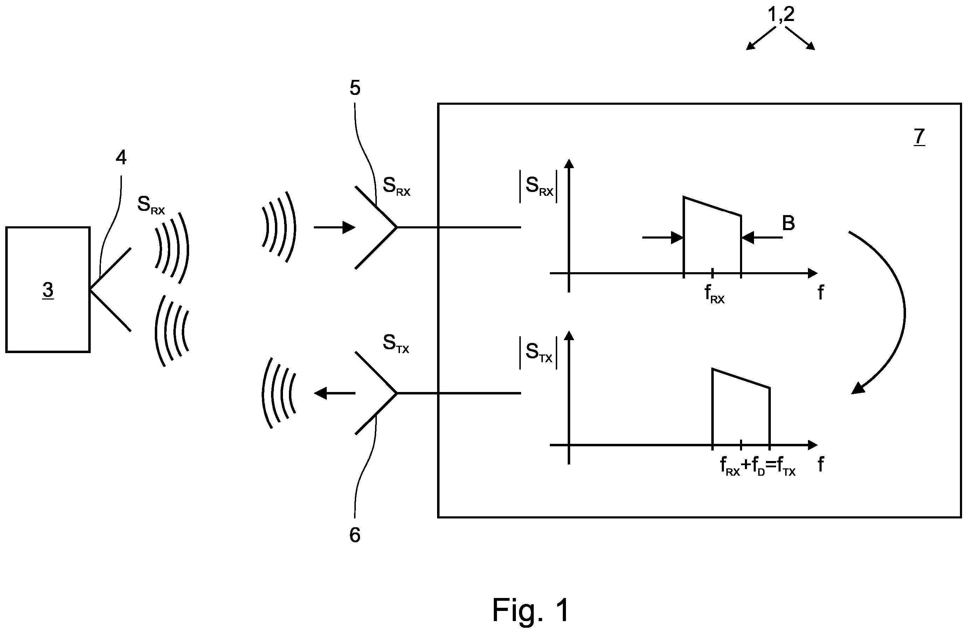

Fig. 1 zeigt ein Verfahren 1 zum Betrieb einer Prüfvorrichtung 2 zum Test eines mit elektromagnetischen Wellen arbeitenden Abstandssensors 3 sowie auch eine entsprechende Prüfvorrichtung 2. Das Verfahren 1 und die Prüfvorrichtung 2 dienen zum Test des Abstandssensors 3, bei dem es sich vorliegend um einen mit Radarwellen arbeitenden Abstandssensor 3 handelt. Der Abstandssensor 3 verfügt über eine Sende- und Empfangsvorrichtung 4 zur Abstrahlung von Radarsignalen und zum Empfang von Radarsignalen, die in der tatsächlichen Anwendung von einem Objekt reflektiert worden sind. In der dargestellten Testsituation gibt es kein tatsächliches Objekt, sondern nur die Prüfvorrichtung 2 mit dem implementierten Verfahren 1 zur Simulation eines tatsächlichen Objekts im Hinblick auf den zu testenden Abstandssensor 3. Das Verfahren 1 und die Prüfvorrichtung 2 dienen der Erzeugung und Abstrahlung eines simulierten elektromagnetischen Reflexionssignals S_{TX} mit einer Reflexionsfrequenz f_{TX}.

Die von dem Abstandssensor 3 abgestrahlte elektromagnetische Welle wird als elektromagnetische Freiraumwelle als Empfangssignal S_{RX} mit einer Empfangsfrequenz f_{RX} empfangen. Das Empfangssignal S_{RX} weist zusätzlich eine Signalbandbreite B auf. Dies ist in Fig. 1 anhand des obersten Frequenzspektrums angedeutet. Das Reflexionssignal S_{TX} wird aus dem elektromagnetischen Empfangssignal S_{RX} in einer hier nicht näher dargestellten Art und Weise erzeugt, wobei die Reflexionsfrequnez f_{TX} um eine Dopplerfrequenz f_{D} gegenüber der Empfangsfrequenz f_{RX} verschoben ist, wobei die Dopplerfrequenz f_{D} kleiner ist als die Signalbandbreite B des Empfangssignals S_{RX}. Dies ist im unteren Teil anhand des zweiten Frequenzspektrums von Fig. 1 angedeutet.

Im vorliegenden Fall hat das Empfangssignal S_{RX} eine Mittenfrequenz f_{RX} von 77 GHz und einer Bandbreite B von 1 GHz. Zum Empfangen des Empfangssignals S_{RX} weist die Prüfvorrichtung 2 ein Empfangselement 5 auf. Zum Abstrahlen des simulierten elektromagnetischen Reflexionssignals S_{TX} weist die Prüfvorrichtung 2 ein Abstrahlelement 6 auf. In dem in Fig. 1 dargestellten Ausführungsbeispiel handelt es sich bei dem Empfangselement 5 und dem Abstrahlelement 6 um getrennt ausgeführte Antennen, was jedoch nicht zwangsweise so sein muss, vielmehr kann das Empfangselement 5 und das Abstrahlelement 6 auch als eine einzige gemeinsame Antenne ausgeführt sein. Die Prüfvorrichtung 2 umfasst eine Signalelektronik 7, die für die Erzeugung des Reflexionssignals S_{TX} aus dem empfangenen Empfangssignal S_{RX} sorgt. Wie dies im Stand der Technik geschieht, ist hier nicht weiter dargestellt.

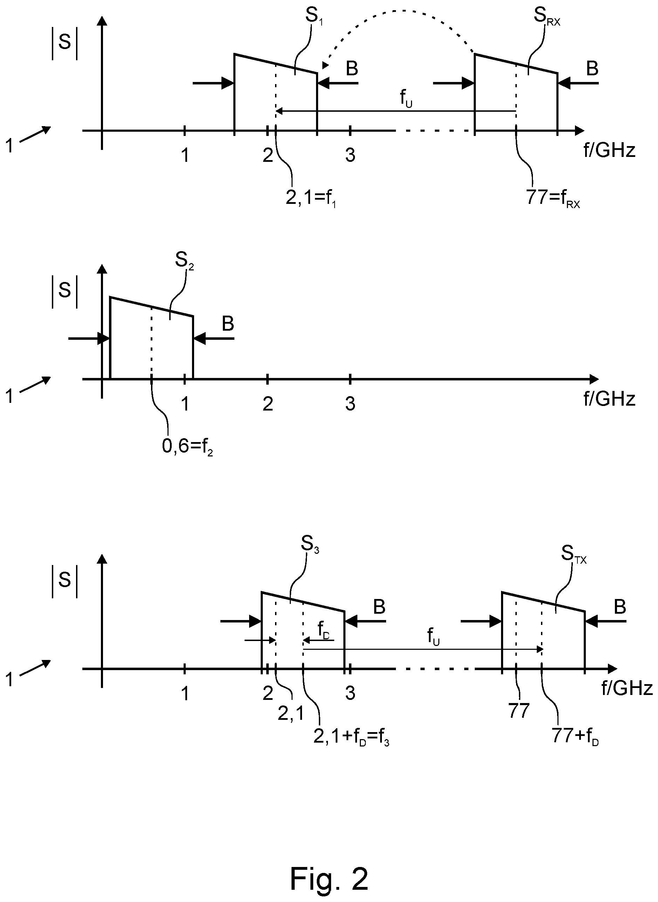

Fig. 2 zeigt nun das Verfahren 1, mit dem aus dem Empfangssignal S_{RX} ein mit der Dopplerfrequenz f_{D} verschobenes Reflexionssignal S_{TX} erzeugt wird. Das Verfahren ist hier anhand von Frequenzspektren dargestellt, in denen die verschiedenen beteiligten Signale frequenzmäßig dargestellt sind. In dem obersten Frequenzspektrum ist zu sehen, dass das hochfrequente Empfangssignal S_{RX} mit einer Empfangsfrequenz f_{RX} von hier 77 GHz in ein erstes Arbeitssignal S₁ mit einer ersten Arbeitsfrequenz f₁ von 2,1 GHz umgesetzt wird. Die Arbeitsfrequenz f₁ ist hier um eine Umsetzfrequenz f_{U} kleiner als die Empfangsfrequenz f_{RX} des Empfangssignals S_{RX}. Diese erste Frequenzumsetzung wird vollzogen, um insgesamt in einem kleinwertigeren Frequenzbereich arbeiten zu können, der schaltungstechnisch besser handhabbar ist. Es ist erkannt worden, dass eine direkte Umsetzung des Empfangssignals S_{RX} in das Reflexionssignal S_{TX} nicht möglich ist, da der gewünschte Frequenzversatz um die Dopplerfrequenz f_{D} extrem klein ist gegenüber der Bandbreite B des Empfangssignals S_{RX}. Ein direktes Mischen des Empfangssignals S_{RX} mit einem Signal mit der Dopplerfrequenz f_{D} oder auch ein zeitdiskretes Abtasten des Empfangssignals S_{RX} mit einer Abtastrate fₛₐₘₚₗₑ, die sehr viel kleiner als die Bandbreite des Empfangssignals S_{RX} ist, würde zu sich überdeckenden Spektren im Frequenzspektrum führen, sodass das Reflexionssignal S_{TX} nicht mehr nur ein einzig frequenzverschobenes Empfangssignal S_{RX} wäre, sondern ein gänzlich anderes Signal.

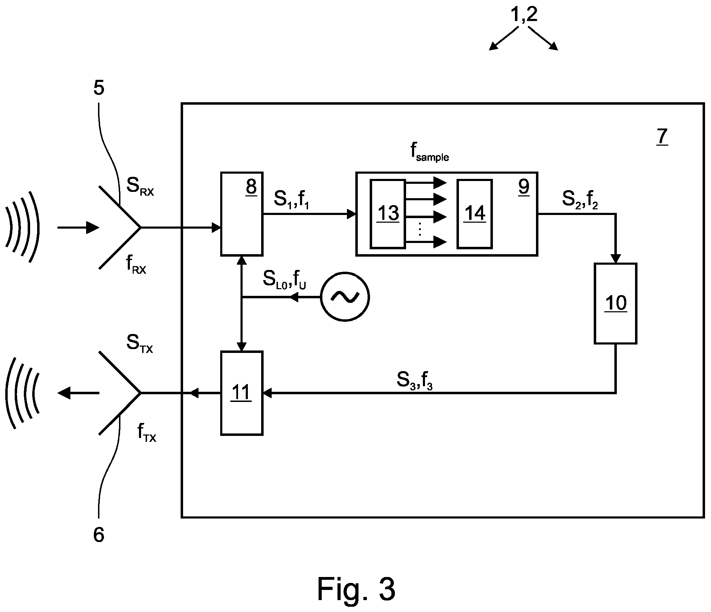

Es ist sinnvoll, parallel zu Fig. 2 auch gleich Fig. 3 zu betrachten, die neben dem signalmäßigen Verlauf des Verfahrens 1 auch gleichzeitig gegenständlich die Prüfvorrichtung 2 schematisch darstellt. In Fig. 3 sind zusätzlich auch gegenständlich die Mittel dargestellt, mit denen die verschiedenen Verfahrensschritte in Fig. 2 durchgeführt werden. So ist beispielsweise in Fig. 3 zu erkennen, dass das Empfangssignal S_{RX} mit einem ersten Umsetzer 8 in das erste Arbeitssignal S₁ umgesetzt wird.

Es ist nun vorgesehen und in Fig. 2 im mittleren Frequenzspektrum dargestellt, dass das erste Arbeitssignal S₁ in ein zweites Arbeitssignal S₂ mit einer zweiten Arbeitsfrequenz f₂ umgesetzt wird, wobei der Betrag der Differenz aus der ersten Arbeitsfrequenz f₁ und der zweiten Arbeitsfrequenz f₂ mindestens so groß ist wie die Signalbandbreite B. Dadurch ist gewährleistet, dass keine überlappenden Bänder im Frequenzspektrum entstehen. Im vorliegenden Fall ist die zweite Arbeitsfrequenz f₂ des zweiten Arbeitssignals zu 0,6 GHz gewählt worden. Der Abstand der Spektren ist mit der zuvor genannten Maßgabe ausreichend groß, um auch bei der nachfolgenden Frequenzverschiebung des zweiten Arbeitssignals S₂ ohne Kollisionen möglicherweise entstehender Frequenzbänder auszukommen. Gegenständlich wird das erste Arbeitssignal S₁ mit einem zweiten Umsetzer 9 neu in das zweite Arbeitssignal S₂ frequenzmäßig umgesetzt (Fig. 3).

In einem weiteren Schritt ist nun vorgesehen, dass das zweite Arbeitssignal S₂ in ein drittes Arbeitssignal S₃ mit einer dritten Arbeitsfrequenz f₃ umgesetzt wird, wobei die dritte Arbeitsfrequenz f₃ der um die Dopplerfrequenz f_{D} verschobenen ersten Arbeitsfrequenz f₁ entspricht. Im dargestellten Beispiel ist die Dopplerfrequenz f_{D} zu der ersten Arbeitsfrequenz f₁ hinzu addiert worden, was einer Annäherung eines zu simulierenden Objekts entspricht. Genauso gut könnte das dritte Arbeitssignal S₃ gegen die erste Arbeitsfrequenz f₁ auch in die andere Richtung, also hin zu niedrigeren Frequenzen verschoben sein, was einem sich entfernenden Objekt entspräche. Da die dritte Arbeitsfrequenz f₃ in Abhängigkeit von der ersten Arbeitsfrequenz f₁ gewählt worden ist, kann das dritte Arbeitssignal S₃ nun um die Umsetzfrequenz f_{U} erhöht werden, also die Umsetzfrequenz f_{U}, die im zuoberst dargestellten Frequenzspektrum zum Umsetzen in einen niedrigen Frequenzbereich gedient hat, wodurch das Reflexionssignal S_{TX} entsteht und schließlich abgestrahlt werden kann. Die Umsetzung des zweiten Arbeitssignals S₂ erfolgt mit einem dritten Umsetzer 10 in das dritte Arbeitssignal S₃. Entsprechend wird das dritte Arbeitssignal S₃ mit einem vierten Umsetzer 11 um die Umsetzfrequenz f_{U} erhöht, wodurch das Reflexionssignal S_{TX} entsteht und abgestrahlt wird.

In dem Ausführungsbeispiel gemäß Fig. 3 erfolgt die Umsetzung des Empfangssignals S_{RX} in das erste Arbeitssignal S₁ durch Mischen des Empfangssignals S_{RX} mit einem Lokaloszillatorsignal S_{LO} mit der Umsetzfrequenz f_{U}. Der erste Umsetzer 8 ist demzufolge als Mischer ausgebildet. Das Lokaloszillator-Signal S_{LO} wird von einem ersten Lokaloszillator 12 erzeugt.

Beim Umsetzen der verschiedenen Signale bleibt die Signalbandbreite B jeweils erhalten. In dem dargestellten Ausführungsbeispiel (oberes Frequenzspektrum in Fig. 2) ist das Spektrum des ersten Arbeitssignals S₁ so verschoben, dass es mit mehr als einer Signalbandbreite B beabstandet ist von der Frequenz 0, denn die kleinste Frequenz des Spektrums des ersten Arbeitssignals S₁ liegt bei 1,6 GHz. Dies spielt im Zusammenhang mit dem vorliegenden Ausführungsbeispiel eine Rolle (mittleres Frequenzspektrum in Fig. 2), da nämlich die zweite Arbeitsfrequenz f₂ des zweiten Arbeitssignals S₂ kleiner ist als die erste Arbeitsfrequenz f₁ des ersten Arbeitssignals S₁.

Die geschickte Wahl der Arbeitsfrequenz f₃ des dritten Arbeitssignals ermöglicht es, dass die Umsetzung des dritten Arbeitssignals S₃ in das Reflexionssignal S_{TX} erzielt wird durch Mischen des dritten Arbeitssignals S₃ mit dem gleichen Lokaloszillator-Signal S_{LO} der Umsetzfrequenz f_{U}. Demzufolge ist der vierte Umsetzer 11 als Mischer ausgestaltet und wird mit dem vom ersten Lokaloszillator 12 erzeugten Lokaloszillator-Signal S_{L0} gespeist. Dies macht den schaltungstechnischen Aufbau einfach, da zum eingangsseitigen Runtermischen des Empfangssignals und zum ausgangsseitigen Hochmischen des dritten Arbeitssignals S₃ zur Erzeugung des Reflexionssignals S_{RX} ein und dasselbe Mischsignal S_{LO} verwendet werden kann.

Wie bereits erwähnt, ist die zweite Arbeitsfrequenz f₂ des vom zweiten Umsetzer 9 erzeugten, zweiten Arbeitssignal S₂ kleiner als die erste Arbeitsfrequenz f₁ des ersten Arbeitssignals S₁; dies ist deshalb problemlos möglich, weil bei der Erzeugung des ersten Arbeitssignals S₁ hinreichend Abstand zur Nullfrequenz gelassen worden ist.

Wie in Fig. 3 angedeutet ist, wird das erste Arbeitssignal S₁ und das zweite Arbeitssignal S₂ umgesetzt durch zeitdiskretes Abtasten des Arbeitssignals S₁ mit einer Abtastfrequenz fₛₐₘₚₗₑ. Durch nachfolgendes digital/analog-Wandeln des abgetasteten Arbeitssignals S₁ entsteht ein analoges Arbeitssignal S₂. Dies geschieht, indem das erste Arbeitssignal S₁ in das zweite Arbeitssignal S₂ umgesetzt wird mit einem von dem zweiten Umsetzer 9 umfassten Analog/Digital-Wandler 13 durch zeitdiskretes Abtasten des Arbeitssignals S₁ mit einer Abtastfrequenz fₛₐₘₚₗₑ. Entsprechend umfasst der zweite Umsetzer 9 auch einen Digital/Analog-Wandler 14, der aus dem abgetasteten Arbeitssignal S₁ ein analoges Arbeitssignal S₂ erzeugt. Wie im allgemeinen Beschreibungsteil ausgeführt, wird hier der Umstand genutzt, dass beim zeitdiskreten Abtasten eines Signals im Frequenzspektrum des abgetasteten Signals eine sich periodisch wiederholende Folge des abgetasteten Signals entsteht, sowohl hin zu höheren Frequenzen wie auch hin zu niedrigeren Frequenzen.

Da das Arbeitssignal S₁ in einen sehr kleinen Frequenzbereich hin verschoben worden ist, können der Analog/Digital-Wandler 13 und der Digital/Analog-Wandler 14 mit verhältnismäßig geringen Datenraten arbeiten. Dies wirkt sich ebenfalls vorteilig auf die vergleichsweise einfache Ausgestaltung der Prüfvorrichtung 2 bzw. der Signalelektronik 7 der Prüfvorrichtung 2 aus. Der zweite Umsetzer 9 ist in einer anderen Ausgestaltung als digitaler Signalprozessor (DSP) ausgestaltet, mit dem eine entsprechende Analog/Digital-Wandlung bzw. Digital/Analog-Wandlung realisiert wird. In dem dargestellten Ausführungsbeispiel ist die Abtastfrequenz fₛₐₘₚₗₑ größer als die Signalbandbreite B des Empfangssignals S_{LX}, wodurch verhindert wird, dass sich die periodisch aneinanderreihenden Frequenzbänder im Frequenzspektrum (hier im Einzelnen nicht dargestellt) überlappen, sodass das abgetastete Signal einwandfrei wieder rekonstruiert werden kann. Im dargestellten Ausführungsbeispiel wird das erste Arbeitssignal S₁ von dem zweiten Umsetzer 9 unterabgetastet. Die Abtastfrequenz fₛₐₘₚₗₑ ist mit 2,7 GHz realisiert worden und demnach kleiner als die doppelte größte Frequenz im Spektrum des ersten Arbeitssignals S₁, die größte Frequenz beträgt hier 2,6 GHz. Durch die so realisierte Unterabtastung entstehen Frequenzbänder in einem niedrigeren Frequenzbereich. Mit dem Wissen, dass diese Frequenzbänder bei dem abgetasteten Signal eigentlich einer höheren Frequenz entsprechen, ist eine einwandfreie Rekonstruktion des abgetasteten Signals auch unter Nutzung des niederfrequenteren Frequenzbandes möglich (digital down conversion).

In dem dargestellten Ausführungsbeispiel ist realisiert, dass die Abtastfrequenz fₛₐₘₚₗₑ des von dem zweiten Umsetzer 9 umfassten Analog/DigitalWandlers 13 größer ist als die größte Frequenz im Spektrum des ersten Arbeitssignals S₁, also größer als 2,6 GHz. Bei der gewählten Abtastfrequenz liegt sogenanntes Folding vor, was zu einer Spiegelung des abgetasteten Frequenzbandes führt (Kehrlage, siehe mittleres Frequenzspektrum in Fig. 2).

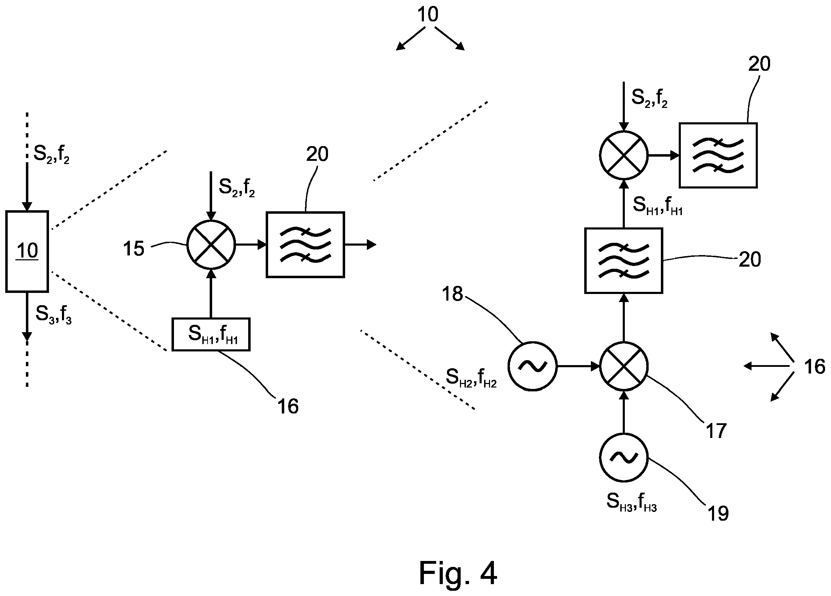

Das Einbringen der Dopplerfrequenz f_{D} erfolgt in dem dritten Umsetzer 10. Der Aufbau des dritten Umsetzers 10, sowie das in ihm umgesetzte Verfahren ist im Rahmen eines Signallaufplanes in Fig. 4 im Detail dargestellt. In Fig. 4 nimmt der Detaillierungsgrad der Darstellung von links nach rechts zu. In der mittleren Abbildung ist zu erkennen, dass das zweite Arbeitssignal S₂ in das dritte Arbeitssignal S₃ durch Mischen mit einem ersten Hilfssignal S_{H1} mit einer Frequenz f_{H1} umgesetzt wird. Der dritte Umsetzer 10 ist daher im Wesentlichen als Mischer ausgebildet bzw. umfasst als zentrales Element einen solchen Mischer 15. Das erste Hilfssignal S_{H1} wird von einem Hilfssignalgenerator 16 erzeugt.

Die Frequenz f_{H1} des von dem Hilfssignalgenerator 16 erzeugten ersten Hilfssignals S_{H1} entspricht der Summenfrequenz aus der Frequenz f₁ des ersten Arbeitssignals S₁, der Frequenz f₂ des zweiten Arbeitssignals S₂ und der Dopplerfrequenz f_{D} bzw. der negativen Dopplerfrequenz -f_{D}. Dadurch kann eine Frequenzverschiebung des Empfangssignals S_{RX} sowohl zu einer um die Dopplerfrequenz f_{D} erhöhten Frequenz wie auch zu einer um die Dopplerfrequenz f_{D} verringerten Frequenz realisiert werden. In Fig. 4 ist ebenfalls zu erkennen, dass das erste Hilfssignal S_{H1} von dem Hilfssignalgenerator 16 erzeugt wird durch Mischen eines zweiten Hilfssignals S_{H2} mit der Frequenz f_{H2} und eines dritten Hilfssignals S_{H3} mit der Frequenz f_{H3} mit einem Hilfssignalmischer 17. Die Frequenz f_{H2} entspricht der Summenfrequenz aus der Frequenz f₁ des ersten Arbeitssignals S_{H1} und der Frequenz f₂ des zweiten Arbeitssignals S₂. Die Frequenz f_{H3} des dritten Hilfssignals S_{H3} entspricht der Dopplerfrequenz f_{D}. Der Hilfssignalgenerator 16 umfasst einen Lokaloszillator 18 mit einer festen Frequenz und einem einstellbaren Oszillator 19 mit einer einstellbaren Frequenz. Das zweite Hilfssignal S_{H2} wird demzufolge durch den Lokaloszillator 18 mit einer festen Frequenz erzeugt und das dritte Hilfssignal S_{H3} wird durch den einstellbaren Oszillator 19 mit einer einstellbaren Frequenz erzeugt. Diese einstellbare Frequenz ist die Dopplerfrequenz f_{D}, um die das Empfangssignal S_{RX} zu verschieben ist. Die Dopplerfrequenz f_{D} wird üblicherweise aus einer Umgebungssimulation vorgegeben und ändert sich ständig mit der sich ständig ändernden Fahrsituation, die von einem Umgebungssimulator simuliert wird.

Wie insbesondere der Darstellung in Fig. 4 zu entnehmen ist, werden die erzeugten Signale - zumindest teilweise - mittels eines geeigneten Bandpassfilters 20 oder mittels eines geeigneten Tiefpassfilters aus einem Gesamtspektrum herausgefiltert, speziell erfolgt auf einen Mischvorgang eine Bandpassfilterung oder eine Tiefpassfilterung.

Hier ist realisiert, dass nach dem Mischen des zweiten Hilfssignals S_{H2} mit dem dritten Hilfssignal S_{H3} mittels des Hilfssignalmischers 17 ein sehr schmalbandiges Bandpassfilter 20 eingesetzt wird, um eines der beiden entstehenden Mischsignale auszufiltern, vorliegend ist es das Mischsignal mit der Frequenz f₁ + f₂ + f_{D}, wie der untersten Darstellung in Fig. 3 zu entnehmen ist.

### Bezugszeichen

- 1: Verfahren
- 2: Prüfvorrichtung
- 3: Abstandssensor
- 4: Sende- und Empfangsvorrichtung
- 5: Empfangselement
- 6: Abstrahlelement
- 7: Signalelektronik
- 8: erster Umsetzer
- 9: zweiter Umsetzer
- 10: dritter Umsetzer
- 11: vierter Umsetzer
- 12: erster Lokaloszillator
- 13: Analog/Digital-Wandler
- 14: Digital/Analog-Wandler
- 15: Mischer
- 16: Hilfssignalgenerator
- 17: Hilfssignalgenerator
- 18: Lokaloszillator
- 19: einstellbarer Oszillator
- 20: Bandpassfilter

## Patentansprüche

1. Verfahren (1) zum Betrieb einer Prüfvorrichtung (2) zum Test eines mit elektromagnetischen Wellen arbeitenden Abstandssensors (3), nämlich zur Erzeugung und Abstrahlung eines simulierten elektromagnetischen Reflexionssignals S_{TX} mit einer Reflexionsfrequenz f_{TX}, wobei eine elektromagnetische Freiraumwelle als Empfangssignal S_{RX} mit einer Empfangsfrequenz f_{RX} und einer Signalbandbreite B empfangen wird und wobei das Reflexionssignal s_{TX} aus dem elektromagnetischen Empfangssignal S_{RX} erzeugt wird, wobei die Reflexionsfrequenz f_{TX} um eine Dopplerfrequenz f_{D} gegenüber der Empfangsfrequenz f_{RX} verschoben ist, wobei die Dopplerfrequenz f_{D} kleiner ist als die Signalbandbreite B des Empfangssignals S_{RX},
wobei das Empfangssignal S_{RX} in ein erstes Arbeitssignal S₁ mit einer ersten Arbeitsfrequenz f₁ umgesetzt wird, wobei die Arbeitsfrequenz f₁ um eine Umsetzfrequenz f_{U} kleiner ist als die Empfangsfrequenz f_{RX} des Empfangssignals S_{RX},
wobei das erste Arbeitssignal S₁ in ein zweites Arbeitssignal S₂ mit einer zweiten Arbeitsfrequenz f₂ umgesetzt wird, wobei der Betrag der Differenz aus der ersten Arbeitsfrequenz f₁ und der zweiten Arbeitsfrequenz f₂ mindestens so groß ist wie die Signalbandbreite B, vorzugsweise mindestens so groß ist wie die Summe aus der Signalbandbreite B und der Dopplerfrequenz f_{D},
wobei das zweite Arbeitssignal S₂ in ein drittes Arbeitssignal S₃ mit einer dritten Arbeitsfrequenz f₃ umgesetzt wird, wobei die dritte Arbeitsfrequenz f₃ der um die Dopplerfrequenz f_{D} verschobenen ersten Arbeitsfrequenz f₁ entspricht und
wobei das dritte Arbeitssignal S₃ um die Umsetzfrequenz f_{U} erhöht wird und so in das Reflexionssignal S_{TX} umgesetzt und abgestrahlt wird,
**dadurch gekennzeichnet,**
**dass** das erste Arbeitssignal S₁ in das zweite Arbeitssignal S₂ umgesetzt wird durch zeitdiskretes Abtasten des Arbeitssignals S₁ mit einer Abtastfrequenz fₛₐₘₚₗₑ und nachfolgendes digital/anolog-Wandeln des abgetasteten Arbeitssignals S₁ in ein analoges Arbeitssignal S₂ und
**dass** die Abtastfrequenz fₛₐₘₚₗₑ größer ist als die Signalbandbreite B des Empfangssignals S_{RX} und dass das erste Arbeitssignal S₁ unterabgetastet wird, fₛₐₘₚₗₑ ist demnach kleiner als die doppelte größte Frequenz im Spektrum des ersten Arbeitssignals S₁.

2. Verfahren (1) nach Anspruch 1, **dadurch gekennzeichnet, dass** die Umsetzung des Empfangssignals S_{RX} in das erste Arbeitssignal S₁ durch Mischen des Empfangssignals S_{RX} mit einem Lokaloszillator-Signal S_{LO} der Umsetzfrequenz f_{U} erfolgt.

3. Verfahren (1) nach Anspruch 1 oder 2, **dadurch gekennzeichnet, dass** ein Spektrum des ersten Arbeitssignals S₁ mit einer Signalbandbreite B mindestens um die Signalbandbreite B beabstandet ist von der Frequenz null.

4. Verfahren (1) nach einem der Ansprüche 1 bis 3, **dadurch gekennzeichnet, dass** die Umsetzung des dritten Arbeitssignals S₃ in das Reflexionssignal S_{TX} erzielt wird durch Mischen des dritten Arbeitssignals S₃ mit einem Lokaloszillator-Signal S_{LO} der Umsetzfrequenz f_{U}.

5. Verfahren (1) nach Anspruch 4, **dadurch gekennzeichnet, dass** es sich bei dem Lokaloszillator-Signal S_{LO} der Umsetzfrequenz f_{U} zum Mischen des Empfangssignals S_{RX} und zum Mischen des Reflexionssignals S_{RX} um ein identisches Lokaloszillator-Signal S_{LO} handelt, das von einem einzigen Lokaloszillator (12) erzeugt wird.

6. Verfahren (1) nach einem der Ansprüche 1 bis 5, **dadurch gekennzeichnet, dass** die zweite Arbeitsfrequenz f₂ des zweiten Arbeitssignals S₂ kleiner ist als die erste Arbeitsfrequenz f₁ des ersten Arbeitssignals S₁.

7. Verfahren (1) nach Anspruch einem der Ansprüche 1 bis 6, **dadurch gekennzeichnet, dass** die Abtastfrequenz fₛₐₘₚₗₑ größer ist als die größte Frequenz im Spektrum des ersten Arbeitssignals S₁.

8. Verfahren (1) nach einem der Ansprüche 1 bis 7, **dadurch gekennzeichnet, dass** das zweite Arbeitssignal S₂ in das dritte Arbeitssignal S₃ durch Mischen mit einem ersten Hilfssignal S_{H1} mit einer Frequenz f_{H1} umgesetzt wird.

9. Verfahren (1) nach Anspruch 8, **dadurch gekennzeichnet, dass** die Frequenz f_{H1} des ersten Hilfssignals S_{H1} der Summenfrequenz aus der Frequenz f₁ des ersten Arbeitssignals S₁, der Frequenz f₂ des zweiten Arbeitssignals S₂ und der Dopplerfrequenz f_{D} bzw. -f_{D} entspricht.

10. Verfahren (1) nach Anspruch 8 oder 9, **dadurch gekennzeichnet, dass** das erste Hilfssignal S_{H1} erzeugt wird durch Mischen eines zweiten Hilfssignals S_{H2} mit der Frequenz f_{H2} und eines dritten Hilfssignals S_{H3} mit der Frequenz f_{H3}, wobei die Frequenz f_{H2} der Summenfrequenz aus der Frequenz f₁ des ersten Arbeitssignals S₁, der Frequenz f₂ des zweiten Arbeitssignals S₂ entspricht und wobei die Frequenz f_{H3} der Dopplerfrequenz f_{D} entspricht.

11. Verfahren (1) nach Anspruch 10, **dadurch gekennzeichnet, dass** das zweite Hilfssignal S_{H2} durch einen Lokaloszillator (18) mit einer festen Frequenz erzeugt wird und dass das dritte Hilfssignal S_{H3} durch einen einstellbaren Oszillator (19) mit einer einstellbaren Frequenz erzeugt wird.

12. Verfahren (1) nach einem der Ansprüche 1 bis 11, **dadurch gekennzeichnet, dass** zumindest eines der erzeugten Signale mittels eines geeigneten Bandpassfilters (2) oder mittels eines geeigneten Tiefpassfilters aus einem Gesamtspektrum herausgefiltert wird, insbesondere auf einen Mischvorgang eine Bandpassfilterung oder eine Tiefpassfilterung erfolgt.

13. Verfahren (1) nach Anspruch 12 und 10, **dadurch gekennzeichnet, dass** nach dem Mischen des zweiten Hilfssignals S_{H2} mit dem dritten Hilfssignal S_{H3} ein sehr schmalbandiger Bandfilter eingesetzt wird, um eines der beiden entstehenden Mischsignale auszufiltern, entweder also das mit der Frequenz f₁+f₂+f_{D} oder f₁+f₂-f_{D}.

14. Prüfvorrichtung (2) zum Test eines mit elektromagnetischen Wellen arbeitenden Abstandssensors (3) gemäß dem Verfahren (1) nach einem der Ansprüche 1 bis 15, mit einem Empfangselement (5) zum Empfangen einer elektromagnetischen Freiraumwelle als Empfangssignal S_{RX} mit einer Empfangsfrequenz f_{RX} und einer Signalbandbreite B, mit einem Abstrahlelement (6) zur Abstrahlung eines simulierten elektromagnetischen Reflexionssignals S_{TX} mit einer Reflexionsfrequenz f_{TX}, wobei eine Signalelektronik (7) das Reflexionssignal S_{TX} aus dem elektromagnetischen Empfangssignal S_{RX} erzeugt, wobei die Signalelektronik (7) das Reflexionssignal S_{TX} mit einer Reflexionsfrequenz f_{TX} erzeugt, die um eine zu simulierende Dopplerfrequenz f_{D} gegenüber der Empfangsfrequenz f_{RX} des Empfangssignals S_{RX} verschoben ist, wobei die Dopplerfrequenz f_{D} kleiner ist als die Signalbandbreite B des Empfangssignals S_{RX},
wobei das Empfangssignal S_{RX} mit einem ersten Umsetzer (8) in ein erstes Arbeitssignal S₁ mit einer ersten Arbeitsfrequenz f₁ umgesetzt wird, wobei die Arbeitsfrequenz f₁ um eine Umsetzfrequenz f_{U} kleiner ist als die Empfangsfrequenz f_{RX} des Empfangssignals S_{RX},
wobei das erste Arbeitssignal S₁ mit einem zweiten Umsetzer (9) in ein zweites Arbeitssignal S₂ mit einer zweiten Arbeitsfrequenz f₂ umgesetzt wird, wobei der Betrag der Differenz aus der ersten Arbeitsfrequenz f₁ und der zweiten Arbeitsfrequenz f₂ mindestens so groß ist wie die Signalbandbreite B, vorzugsweise mindestens so groß ist wie die Summe aus der Signalbandbreite B und der Dopplerfrequenz f_{D},
wobei das zweite Arbeitssignal S₂ mit einem dritten Umsetzer (10) in ein drittes Arbeitssignal S₃ mit einer dritten Arbeitsfrequenz f₃ umgesetzt wird, wobei die dritte Arbeitsfrequenz f₃ der um die Dopplerfrequenz f_{D} verschobenen ersten Arbeitsfrequenz f₁ entspricht und
wobei das dritte Arbeitssignal S₃ mit einem vierten Umsetzer (11) um die Umsetzfrequenz f_{U} erhöht wird und so in das Reflexionssignal S_{TX} umgesetzt und abgestrahlt wird,
**dadurch gekennzeichnet,**
**dass** das erste Arbeitssignal S₁ in das zweite Arbeitssignal S₂ umgesetzt wird mit einem von dem zweiten Umsetzer (9) umfassten Analog/Digital-Wandler (13) durch zeitdiskretes Abtasten des Arbeitssignals S₁ mit einer Abtastfrequenz fₛₐₘₚₗₑ und nachfolgendes digital/anolog-Wandeln des abgetasteten Arbeitssignals S₁ in ein analoges Arbeitssignal S₂ mit einem von dem zweiten Umsetzer (9) umfassten Digital/Analog-Wandler (14) und
**dass** die Abtastfrequenz fₛₐₘₚₗₑ des von dem zweiten Umsetzer (9) umfassten Analog/Digital-Wandlers (13) größer ist als die Signalbandbreite B des Empfangssignals S_{RX}, und dass das erste Arbeitssignal S₁ unterabgetastet wird, fₛₐₘₚₗₑ ist demnach kleiner als die doppelte größte Frequenz im Spektrum des ersten Arbeitssignals S₁.

15. Prüfvorrichtung (2) nach Anspruch 14, **dadurch gekennzeichnet, dass** die Umsetzung des Empfangssignals S_{RX} in das erste Arbeitssignal S₁ mittels eines als Mischer ausgebildeten ersten Umsetzers durch Mischen des Empfangssignals S_{RX} mit einem von einem ersten Lokaloszillator erzeugten Lokaloszillator-Signals S_{LO} der Umsetzfrequenz f_{U} erfolgt.

16. Prüfvorrichtung (2) nach Anspruch 14 oder 15, **dadurch gekennzeichnet, dass** ein Spektrum des von dem ersten Umsetzer (8) erzeugten ersten Arbeitssignals S₁ mit einer Signalbandbreite B mindestens um die Signalbandbreite B beabstandet ist von der Frequenz null.

17. Prüfvorrichtung (2) nach einem der Ansprüche 14 bis 16, **dadurch gekennzeichnet, dass** die Umsetzung des dritten Arbeitssignals S₃ durch den als Mischer ausgestalteten vierten Umsetzer (11) in das Reflexionssignal S_{TX} erzielt wird durch Mischen des dritten Arbeitssignals S₃ mit dem vom ersten Lokaloszillator (12) erzeugten Lokaloszillatorsignal S_{LO} der Umsetzfrequenz f_{U}.

18. Prüfvorrichtung (2) nach einem der Ansprüche 14 bis 17, **dadurch gekennzeichnet, dass** die zweite Arbeitsfrequenz f₂ des vom zweiten Umsetzer (9) erzeugten zweiten Arbeitssignals S₂ kleiner ist als die erste Arbeitsfrequenz f₁ des ersten Arbeitssignals S₁.

19. Prüfvorrichtung (2) nach Anspruch 18, **dadurch gekennzeichnet, dass** die Abtastfrequenz fₛₐₘₚₗₑ des von dem zweiten Umsetzer (9) umfassten Analog/Digital-Wandlers (13) größer ist als die größte Frequenz im Spektrum des ersten Arbeitssignals S₁.

20. Prüfvorrichtung (2) nach einem der Ansprüche 14 bis 19, **dadurch gekennzeichnet, dass** das zweite Arbeitssignal S₂ in das dritte Arbeitssignal S₃ mit dem als Mischer (15) ausgebildeten dritten Umsetzer (10) durch Mischen mit einem von einem Hilfssignalgenerator (16) erzeugten ersten Hilfssignal S_{H1} mit einer Frequenz f_{H1} umgesetzt wird.

21. Prüfvorrichtung (2) nach Anspruch 220, **dadurch gekennzeichnet, dass** die Frequenz f_{H1} des von dem Hilfssignalgenerator (16) erzeugten ersten Hilfssignals S_{H1} der Summenfrequenz aus der Frequenz f₁ des ersten Arbeitssignals S₁, der Frequenz f₂ des zweiten Arbeitssignals S₂ und der Dopplerfrequenz f_{D} entspricht.

22. Prüfvorrichtung (2) nach Anspruch 20 oder 21, **dadurch gekennzeichnet, dass** das erste Hilfssignal S_{H1} von dem Hilfssignalgenerator (16) erzeugt wird durch Mischen eines zweiten Hilfssignals S_{H2} mit der Frequenz f_{H2} und eines dritten Hilfssignals S_{H3} mit der Frequenz f_{H3} mit einem Hilfssignalmischer (17), wobei die Frequenz f_{H2} der Summenfrequenz aus der Frequenz f₁ des ersten Arbeitssignals S₁, der Frequenz f₂ des zweiten Arbeitssignals S₂ entspricht und wobei die Frequenz f_{H3} der Dopplerfrequenz f_{D} entspricht.

23. Prüfvorrichtung (2) nach Anspruch 22, **dadurch gekennzeichnet, dass** der Hilfssignalgenerator (16) einen Lokaloszillator (18) mit einer festen Frequenz und einen einstellbaren Oszillator (19) mit einer einstellbaren Frequenz umfasst, und dass das zweite Hilfssignal S_{H2} durch den Lokaloszillator (18) mit einer festen Frequenz erzeugt wird und dass das dritte Hilfssignal S_{H3} durch den einstellbaren Oszillator (19) mit einer einstellbaren Frequenz erzeugt wird.

24. Prüfvorrichtung (2) nach einem der Ansprüche 14 bis 23, **dadurch gekennzeichnet, dass** zumindest eines der erzeugten Signale mittels eines geeigneten Bandpassfilters (20) oder mittels eines geeigneten Tiefpassfilters aus einem Gesamtspektrum herausgefiltert wird, insbesondere auf einen Mischvorgang eine Bandpassfilterung oder eine Tiefpassfilterung erfolgt.

25. Prüfvorrichtung (2) nach Anspruch 24, **dadurch gekennzeichnet, dass** nach dem Mischen des zweiten Hilfssignals S_{H2} mit dem dritten Hilfssignal S_{H3} mittels des Hilfssignalmischers (17) ein sehr schmalbandiges Bandpassfilter (20) eingesetzt wird, um eines der beiden entstehenden Mischsignale auszufiltern, entweder also das mit der Frequenz f₁+f₂+f_{D} oder das mit der Frequenz f₁+f₂-f_{D}.

## Claims

1. Method (1) for operating a test device (2) for testing a distance sensor (3) operating with electromagnetic waves, namely for generating and emitting a simulated electromagnetic reflection signal S_{TX} with a reflection frequency f_{TX}, wherein an electromagnetic free-space wave is received as a received signal S_{RX} with a received frequency f_{RX} and a signal bandwidth B and wherein the reflection signal S_{TX} is generated from the electromagnetic received signal S_{RX}, wherein the reflection frequency f_{TX} is shifted by a Doppler frequency f_{D} relative to the received frequency f_{RX}, wherein the Doppler frequency f_{D} is smaller than the signal bandwidth B of the received signal S_{RX},
wherein the received signal S_{RX} is converted into a first working signal S₁ with a first working frequency f₁, wherein the working frequency f₁ is smaller by a conversion frequency f_{U} than the reception frequency f_{RX} of the received signal S_{RX},
wherein the first working signal S' is converted into a second working signal S₂ with a second working frequency f₂, wherein the absolute value of the difference between the first working frequency f₁ and the second working frequency f₂ is at least as large as the signal bandwidth B, preferably at least as large as the sum of the signal bandwidth B and the Doppler frequency f_{D},
wherein the second working signal S₂ is converted into a third working signal S₃ with a third working frequency f₃, wherein the third working frequency f₃ corresponds to the first working frequency f₁ shifted by the Doppler frequency f_{D}, and
wherein the third working signal S₃ is increased by the conversion frequency fu and is thus converted into the reflection signal S_{TX} and emitted,
**characterised in**
**that** the first working signal S₁ is converted into the second working signal S₂ by discrete-time sampling of the working signal S₁ with a sampling frequency fₛₐₘₚₗₑ and subsequent digital/analogue conversion of the sampled working signal S₁ into an analogue working signal S₂ and
in that the sampling frequency fₛₐₘₚₗₑ is greater than the signal bandwidth B of the received signal S_{RX} and in that the first working signal S₁ is undersampled, fₛₐₘₚₗₑ is thus less than twice the largest frequency in the spectrum of the first working signal S₁.

2. Method (1) according to claim 1, **characterised in that** the conversion of the received signal S_{RX} into the first working signal S₁ takes place by mixing the received signal S_{RX} with a local oscillator signal S_{LO} of the conversion frequency f_{U}.

3. Method (1) according to claim 1 or 2, **characterised in that** a spectrum of the first working signal S₁ with a signal bandwidth B is spaced apart from the frequency zero by at least the signal bandwidth B.

4. Method (1) according to one of claims 1 to 3, **characterised in that** the conversion of the third working signal S₃ into the reflection signal S_{TX} is achieved by mixing the third working signal S₃ with a local oscillator signal S_{LO} of the conversion frequency f_{U}.

5. Method (1) according to claim 4, **characterised in that** the local oscillator signal S_{LO} of the conversion frequency f_{U} for mixing the received signal S_{RX} and for mixing the reflection signal S_{RX} is an identical local oscillator signal S_{LO} which is generated by a single local oscillator (12).

6. Method (1) according to one of claims 1 to 5, **characterised in that** the second operating frequency f₂ of the second operating signal S₂ is lower than the first operating frequency f₁ of the first operating signal S₁.

7. Method (1) according to claim 1 to 6, **characterised in that** the sampling frequency fₛₐₘₚₗₑ is greater than the largest frequency in the spectrum of the first working signal S₁.

8. Method (1) according to one of claims 1 to 7, **characterised in that** the second working signal S₂ is converted into the third working signal S₃ by mixing with a first auxiliary signal S_{H1} having a frequency f_{H1}.

9. Method (1) according to claim 8, **characterised in that** the frequency f_{H1} of the first auxiliary signal S_{H1} corresponds to the sum frequency of the frequency f₁ of the first working signal S₁, the frequency f₂ of the second working signal S₂ and the Doppler frequency f_{D} or - f_{D}.

10. Method (1) according to claim 8 or 9, **characterised in that** the first auxiliary signal S_{H1} is generated by mixing a second auxiliary signal S_{H2} with the frequency f_{H2} and a third auxiliary signal S_{H3} with the frequency f_{H3}, wherein the frequency f_{H2} corresponds to the sum frequency of the frequency f₁ of the first working signal S₁, the frequency f₂ of the second working signal S₂ and wherein the frequency f_{H3} corresponds to the Doppler frequency f_{D}.

11. Method (1) according to claim 10, **characterised in that** the second auxiliary signal S_{H2} is generated by a local oscillator (18) with a fixed frequency and **in that** the third auxiliary signal S_{H3} is generated by an adjustable oscillator (19) with an adjustable frequency.

12. Method (1) according to one of claims 1 to 11, **characterised in that** at least one of the generated signals is filtered out of an overall spectrum by means of a suitable band-pass filter (2) or by means of a suitable low-pass filter, in particular band-pass filtering or low-pass filtering is applied to a mixing process.

13. Method (1) according to claims 12 and 10, **characterised in that** after mixing the second auxiliary signal S_{H2} with the third auxiliary signal S_{H3}, a very narrow-band bandpass filter is used to filter out one of the two resulting mixed signals, i.e. either the one with the frequency f₁+f₂+f_{D} or f₁+f₂-f_{D}.

14. Test device (2) for testing a distance sensor (3) operating with electromagnetic waves according to the method (1) according to one of claims 1 to 15, with a receiving element (5) for receiving an electromagnetic free-space wave as a received signal S_{RX} with a reception frequency f_{RX} and a signal bandwidth B, with a radiating element (6) for radiating a simulated electromagnetic reflection signal S_{TX} with a reflection frequency f_{TX}, wherein signal electronics (7) generate the reflection signal S_{TX} from the electromagnetic received signal S_{RX}, wherein the signal electronics (7) generate the reflection signal S_{TX} with a reflection frequency f_{TX} which is shifted by a Doppler frequency f_{D} to be simulated with respect to the received frequency f_{RX} of the received signal S_{RX}, wherein the Doppler frequency f_{D} is smaller than the signal bandwidth B of the received signal S_{RX},
wherein the received signal S_{RX} is converted with a first converter (8) into a first working signal S₁ with a first working frequency f₁, wherein the working frequency f₁ is smaller by a conversion frequency f_{U} than the reception frequency f_{RX} of the received signal S_{RX},
wherein the first working signal S₁ is converted by a second converter (9) into a second working signal S₂ with a second working frequency f₂, wherein the absolute value of the difference between the first working frequency f₁ and the second working frequency f₂ is at least as large as the signal bandwidth B, preferably at least as large as the sum of the signal bandwidth B and the Doppler frequency f_{D},
wherein the second working signal S₂ is converted by a third converter (10) into a third working signal S₃ with a third working frequency f₃, wherein the third working frequency f₃ corresponds to the first working frequency f₁ shifted by the Doppler frequency f_{D}, and
wherein the third working signal S₃ is increased by the conversion frequency fu by means of a fourth converter (11) and is thus converted into the reflection signal S_{TX} and emitted,
**characterised in**
**in that** the first working signal S₁ is converted into the second working signal S₂ with an analogue/digital converter (13) included by the second converter (9) by discrete-time sampling of the working signal S₁ with a sampling frequency fₛₐₘₚₗₑ and subsequent digital/analogue conversion of the sampled working signal S₁ into an analogue working signal S₂ with a digital/analogue converter (14) included by the second converter (9) and
**in that** the sampling frequency fₛₐₘₚₗₑ of the analogue/digital converter (13) comprised by the second converter (9) is greater than the signal bandwidth B of the received signal S_{RX}, and **in that** the first working signal S₁ is undersampled, fₛₐₘₚₗₑ is thus less than twice the largest frequency in the spectrum of the first working signal S₁.

15. Test device (2) according to claim 14, **characterised in that** the conversion of the received signal S_{RX} into the first working signal S₁ is carried out by means of a first converter designed as a mixer by mixing the received signal S_{RX} with a local oscillator signal S_{LO} of the conversion frequency f_{U} generated by a first local oscillator.

16. Test device (2) according to claim 14 or 15, **characterised in that** a spectrum of the first working signal S₁ with a signal bandwidth B generated by the first converter (8) is spaced apart from the frequency zero by at least the signal bandwidth B.

17. Test device (2) according to one of claims 14 to 16, **characterised in that** the conversion of the third working signal S₃ by the fourth converter (11) designed as a mixer into the reflection signal S_{TX} is achieved by mixing the third working signal S₃ with the local oscillator signal S_{LO} of the conversion frequency f_{U} generated by the first local oscillator (12).

18. Test device (2) according to one of claims 14 to 17, **characterised in that** the second working frequency f₂ of the second working signal S₂ generated by the second converter (9) is lower than the first working frequency f₁ of the first working signal S₁.

19. Test device (2) according to claim 18, **characterised in that** the sampling frequency fₛₐₘₚₗₑ of the analogue/digital converter (13) encompassed by the second converter (9) is greater than the largest frequency in the spectrum of the first working signal S₁.

20. Test device (2) according to one of claims 14 to 19, **characterised in that** the second working signal S₂ is converted into the third working signal S₃ with the third converter (10), which is designed as a mixer (15), by mixing with a first auxiliary signal S_{H1} with a frequency f_{H1} generated by an auxiliary signal generator (16).

21. Test device (2) according to claim 20, **characterised in that** the frequency f_{H1} of the first auxiliary signal S_{H1} generated by the auxiliary signal generator (16) corresponds to the sum frequency of the frequency f₁ of the first working signal S₁, the frequency f₂ of the second working signal S₂ and the Doppler frequency f_{D}.

22. Test device (2) according to claim 20 or 21, **characterised in that** the first auxiliary signal S_{H1} is generated by the auxiliary signal generator (16) by mixing a second auxiliary signal S_{H2} with the frequency f_{H2} and a third auxiliary signal S_{H3} with the frequency f_{H3} with an auxiliary signal mixer (17), wherein the frequency f_{H2} corresponds to the sum frequency of the frequency f₁ of the first working signal S₁, the frequency f₂ of the second working signal S₂ and wherein the frequency f_{H3} corresponds to the Doppler frequency f_{D}.

23. Test device (2) according to claim 22, **characterised in that** the auxiliary signal generator (16) comprises a local oscillator (18) with a fixed frequency and an adjustable oscillator (19) with an adjustable frequency, and **in that** the second auxiliary signal S_{H2} is generated by the local oscillator (18) with a fixed frequency and **in that** the third auxiliary signal S_{H3} is generated by the adjustable oscillator (19) with an adjustable frequency.

24. Test device (2) according to one of claims 14 to 23, **characterised in that** at least one of the generated signals is filtered out of an overall spectrum by means of a suitable band-pass filter (20) or by means of a suitable low-pass filter, in particular band-pass filtering or low-pass filtering follows a mixing process.

25. Test device (2) according to claim 24, **characterised in that** after mixing the second auxiliary signal S_{H2} with the third auxiliary signal S_{H3} by means of the auxiliary signal mixer (17), a very narrow-band bandpass filter (20) is used to filter out one of the two resulting mixed signals, either that with the frequency f₁+f₂+f_{D} or that with the frequency f₁+f₂-f_{D}.

## Revendications

1. Procédé (1) de fonctionnement d'un dispositif de contrôle (2) pour tester un capteur de distance (3) fonctionnant avec des ondes électromagnétiques, à savoir pour générer et émettre un signal de réflexion électromagnétique simulé S_{TX} avec une fréquence de réflexion f_{TX}, une onde électromagnétique d'espace libre étant reçue comme signal de réception S_{RX} avec une fréquence de réception f_{RX} et une largeur de bande de signal B, et le signal de réflexion S_{TX} étant généré à partir du signal de réception électromagnétique S_{RX}, la fréquence de réflexion f_{TX} étant décalée d'une fréquence Doppler f_{D} par rapport à la fréquence de réception f_{RX}, la fréquence Doppler f_{D} étant inférieure à la largeur de bande de signal B du signal de réception S_{RX},
le signal de réception S_{RX} étant converti en un premier signal de travail S₁ ayant une première fréquence de travail f₁, la fréquence de travail f₁ étant inférieure d'une fréquence de conversion f_{U} à la fréquence de réception f_{RX} du signal de réception S_{RX},
le premier signal de travail S₁ étant converti en un deuxième signal de travail S₂ avec une deuxième fréquence de travail f₂, la valeur absolue de la différence entre la première fréquence de travail f₁ et la deuxième fréquence de travail f₂ étant au moins aussi grande que la largeur de bande de signal B, de préférence au moins aussi grande que la somme de la largeur de bande de signal B et de la fréquence Doppler f_{D},
le deuxième signal de travail S₂ étant converti en un troisième signal de travail S₃ avec une troisième fréquence de travail f₃, la troisième fréquence de travail f₃ correspondant à la première fréquence de travail f₁ décalée de la fréquence Doppler f_{D} et
le troisième signal de travail S₃ étant augmenté de la fréquence de conversion fu et étant ainsi converti en le signal de réflexion S_{TX} et émis,
**caractérisé en ce que**
**en ce que** le premier signal de travail S₁ est converti en le deuxième signal de travail S₂ par échantillonnage discret en temps du signal de travail S₁ avec une fréquence d'échantillonnage fₛₐₘₚₗₑ et conversion numérique/analogique subséquente du signal de travail échantillonné S₁ en un signal de travail analogique S₂ et
**en ce que** la fréquence d'échantillonnage fsample est supérieure à la largeur de bande de signal B du signal de réception S_{RX} et **en ce que** le premier signal de travail S₁ est sous-échantillonné, fsample étant par conséquent inférieur au double de la plus grande fréquence dans le spectre du premier signal de travail S₁.

2. Procédé (1) selon la revendication 1, **caractérisé en ce que** la conversion du signal de réception S_{RX} en le premier signal de travail S₁ s'effectue par mélange du signal de réception S_{RX} avec un signal d'oscillateur local S_{LO} de fréquence de conversion fu.

3. Procédé (1) selon la revendication 1 ou 2, **caractérisé en ce qu'**un spectre du premier signal de travail S₁ ayant une largeur de bande de signal B est espacé de la fréquence zéro d'au moins la largeur de bande de signal B.

4. Procédé (1) selon l'une des revendications 1 à 3, **caractérisé en ce que** la conversion du troisième signal de travail S₃ en signal de réflexion S_{TX} est obtenue en mélangeant le troisième signal de travail S₃ avec un signal d'oscillateur local S_{LO} de fréquence de conversion f_{U}.

5. Procédé (1) selon la revendication 4, **caractérisé en ce que** le signal d'oscillateur local S_{LO} de fréquence de transposition fu pour mélanger le signal de réception S_{RX} et pour mélanger le signal de réflexion S_{RX} est un signal d'oscillateur local S_{LO} identique généré par un seul oscillateur local (12).

6. Procédé (1) selon l'une des revendications 1 à 5, **caractérisé en ce que** la deuxième fréquence de travail f₂ du deuxième signal de travail S₂ est inférieure à la première fréquence de travail f₁ du premier signal de travail S₁.

7. Procédé (1) selon l'une des revendications 1 à 6, **caractérisé en ce que** la fréquence d'échantillonnage fₛₐₘₚₗₑ est supérieure à la plus grande fréquence du spectre du premier signal de travail S₁-.

8. Procédé (1) selon l'une quelconque des revendications 1 à 7, **caractérisé en ce que** le deuxième signal de travail S₂ est converti en le troisième signal de travail S₃ par mélange avec un premier signal auxiliaire S_{H1} ayant une fréquence f_{H1}-.

9. Procédé (1) selon la revendication 8, **caractérisé en ce que** la fréquence f_{H1} du premier signal auxiliaire S_{H1} correspond à la fréquence de la somme de la fréquence f₁ du premier signal de travail S₁, de la fréquence f₂ du deuxième signal de travail S₂ et de la fréquence Doppler f_{D} ou -f_{D}.

10. Procédé (1) selon la revendication 8 ou 9, **caractérisé en ce que** le premier signal auxiliaire S_{H1} est généré en mélangeant un deuxième signal auxiliaire S_{H2} avec la fréquence f_{H2} et un troisième signal auxiliaire S_{H3} avec la fréquence f_{H3}, la fréquence f_{H2} correspondant à la fréquence de somme de la fréquence f₁ du premier signal de travail S₁, de la fréquence f₂ du deuxième signal de travail S₂ et la fréquence f_{H3} correspondant à la fréquence Doppler f_{D}.

11. Procédé (1) selon la revendication 10, **caractérisé en ce que** le deuxième signal auxiliaire S_{H2} est généré par un oscillateur local (18) à une fréquence fixe et **en ce que** le troisième signal auxiliaire S_{H3} est généré par un oscillateur réglable (19) à une fréquence réglable.

12. Procédé (1) selon l'une des revendications 1 à 11, **caractérisé en ce qu'**au moins l'un des signaux générés est filtré à partir d'un spectre global au moyen d'un filtre passe-bande (2) approprié ou au moyen d'un filtre passe-bas approprié, en particulier un filtrage passe-bande ou un filtrage passe-bas est effectué sur une opération de mélange.

13. Procédé (1) selon les revendications 12 et 10, **caractérisé en ce qu'**après le mélange du deuxième signal auxiliaire S_{H2} avec le troisième signal auxiliaire S_{H3}, un filtre passe-bande à bande très étroite est utilisé pour filtrer l'un des deux signaux mélangés résultants, soit celui ayant la fréquence f₁+f₂+f_{D}, soit f₁+f₂-f_{D}.

14. Dispositif de test (2) pour tester un capteur de distance (3) fonctionnant avec des ondes électromagnétiques selon le procédé (1) selon l'une des revendications 1 à 15, avec un élément de réception (5) pour recevoir une onde électromagnétique en espace libre comme signal de réception S_{RX} avec une fréquence de réception f_{RX} et une largeur de bande de signal B, avec un élément de rayonnement (6) pour rayonner un signal de réflexion électromagnétique simulé S_{TX} avec une fréquence de réflexion f_{TX}, une électronique de signalisation (7) générant le signal de réflexion S_{TX} à partir du signal de réception électromagnétique S_{RX}, l'électronique de signalisation (7) générant le signal de réflexion S_{TX} avec une fréquence de réflexion f_{TX} qui est décalée d'une fréquence Doppler f_{D} à simuler par rapport à la fréquence de réception f_{RX} du signal de réception S_{RX}, la fréquence Doppler f_{D} étant inférieure à la largeur de bande de signal B du signal de réception S_{RX},
le signal de réception S_{RX} étant converti par un premier convertisseur (8) en un premier signal de travail S₁ ayant une première fréquence de travail f₁, la fréquence de travail f₁ étant inférieure d'une fréquence de conversion f_{U} à la fréquence de réception f_{RX} du signal de réception S_{RX},
le premier signal de travail S₁ étant converti par un deuxième convertisseur (9) en un deuxième signal de travail S₂ ayant une deuxième fréquence de travail f₂, la valeur absolue de la différence entre la première fréquence de travail f₁ et la deuxième fréquence de travail f₂ étant au moins aussi grande que la largeur de bande de signal B, de préférence au moins aussi grande que la somme de la largeur de bande de signal B et de la fréquence Doppler f_{D},
le deuxième signal de travail S₂ étant converti par un troisième convertisseur (10) en un troisième signal de travail S₃ avec une troisième fréquence de travail f₃, la troisième fréquence de travail f₃ correspondant à la première fréquence de travail f₁ décalée de la fréquence Doppler f_{D} et
le troisième signal de travail S₃ étant augmenté de la fréquence de conversion f_{U} à l'aide d'un quatrième convertisseur (11) et étant ainsi converti et émis en le signal de réflexion S_{TX},
**caractérisé en ce que**
**en ce que** le premier signal de travail S1 est converti en le deuxième signal de travail S2 avec un convertisseur analogique/numérique (13) compris par le deuxième convertisseur (9) par échantillonnage discret en temps du signal de travail S1 avec une fréquence d'échantillonnage fₛₐₘₚₗₑ et conversion numérique/analogique subséquente du signal de travail échantillonné S₁ en un signal de travail analogique S₂ avec un convertisseur numérique/analogique (14) compris par le deuxième convertisseur (9) et
**en ce que** la fréquence d'échantillonnage fₛₐₘₚₗₑ du convertisseur analogique/numérique (13) entouré par le deuxième convertisseur (9) est supérieure à la largeur de bande de signal B du signal de réception S_{RX}, et **en ce que** le premier signal de travail S₁ est sous-échantillonné, fₛₐₘₚₗₑ est donc inférieur au double de la plus grande fréquence dans le spectre du premier signal de travail S₁.

15. Dispositif de contrôle (2) selon la revendication 14, **caractérisé en ce que** la conversion du signal de réception S_{RX} en le premier signal de travail S₁ s'effectue au moyen d'un premier convertisseur conçu comme un mélangeur, par mélange du signal de réception S_{RX} avec un signal d'oscillateur local S_{LO} de la fréquence de conversion f_{U}, généré par un premier oscillateur local.

16. Dispositif de contrôle (2) selon la revendication 14 ou 15, **caractérisé en ce qu'**un spectre du premier signal de travail S₁ généré par le premier convertisseur (8) avec une largeur de bande de signal B est espacé de la fréquence zéro d'au moins la largeur de bande de signal B.

17. Dispositif de contrôle (2) selon l'une des revendications 14 à 16, **caractérisé en ce que** la conversion du troisième signal de travail S₃ par le quatrième convertisseur (11) conçu comme un mélangeur en signal de réflexion S_{TX} est obtenue en mélangeant le troisième signal de travail S₃ avec le signal d'oscillateur local S_{LO} de la fréquence de conversion f_{U} généré par le premier oscillateur local (12).

18. Dispositif de contrôle (2) selon l'une des revendications 14 à 17, **caractérisé en ce que** la deuxième fréquence de travail f₂ du deuxième signal de travail S₂ généré par le deuxième convertisseur (9) est inférieure à la première fréquence de travail f₁ du premier signal de travail S₁.

19. Dispositif de test (2) selon la revendication 18, **caractérisé en ce que** la fréquence d'échantillonnage fₛₐₘₚₗₑ du convertisseur analogique/numérique (13) compris dans le deuxième convertisseur (9) est supérieure à la plus grande fréquence du spectre du premier signal de travail S₁.

20. Dispositif de contrôle (2) selon l'une des revendications 14 à 19, **caractérisé en ce que** le deuxième signal de travail S₂ est converti en le troisième signal de travail S₃ par le troisième convertisseur (10) réalisé sous la forme d'un mélangeur (15), par mélange avec un premier signal auxiliaire S_{H1} généré par un générateur de signaux auxiliaires (16) et ayant une fréquence f_{H1}.

21. Dispositif de contrôle (2) selon la revendication 22, **caractérisé en ce que** la fréquence f_{H1} du premier signal auxiliaire S_{H1} généré par le générateur de signaux auxiliaires (16) correspond à la fréquence cumulée de la fréquence f₁ du premier signal de travail S₁, de la fréquence f₂ du deuxième signal de travail S₂ et de la fréquence Doppler f_{D}.

22. Dispositif de test (2) selon la revendication 20 ou 21, **caractérisé en ce que** le premier signal auxiliaire S_{H1} est généré par le générateur de signaux auxiliaires (16) en mélangeant un deuxième signal auxiliaire S_{H2} à la fréquence f_{H2} et un troisième signal auxiliaire S_{H3} à la fréquence f_{H3} avec un mélangeur de signaux auxiliaires (17), la fréquence f_{H2} correspondant à la somme de la fréquence f₁ du premier signal de travail S₁ et de la fréquence f₂ du deuxième signal de travail S₂, et la fréquence f_{H3} correspondant à la fréquence Doppler f_{D}.

23. Dispositif de test (2) selon la revendication 22, **caractérisé en ce que** le générateur de signaux auxiliaires (16) comprend un oscillateur local (18) avec une fréquence fixe et un oscillateur réglable (19) avec une fréquence réglable, et **en ce que** le deuxième signal auxiliaire S_{H2} est généré par l'oscillateur local (18) avec une fréquence fixe et **en ce que** le troisième signal auxiliaire S_{H3} est généré par l'oscillateur réglable (19) avec une fréquence réglable.

24. Dispositif de test (2) selon l'une des revendications 14 à 23, **caractérisé en ce qu'**au moins l'un des signaux générés est filtré à partir d'un spectre global au moyen d'un filtre passe-bande (20) approprié ou au moyen d'un filtre passe-bas approprié, en particulier un filtrage passe-bande ou un filtrage passe-bas est effectué sur une opération de mélange.

25. Dispositif de test (2) selon la revendication 24, **caractérisé en ce qu'**après le mélange du deuxième signal auxiliaire S_{H2} avec le troisième signal auxiliaire S_{H3} au moyen du mélangeur de signaux auxiliaires (17), un filtre passe-bande (20) à bande très étroite est utilisé pour filtrer l'un des deux signaux mélangés résultants, soit celui ayant la fréquence f₁+f₂+f_{D}, soit celui ayant la fréquence f₁+f₂-f_{D}.
